# EUROPEAN PATENT APPLICATION

(11) **EP 1 582 636 A1**
(43) Date of publication of application: **05.10.2005**
(21) Application number: 04007547.5
(22) Date of filing: 29.03.2004
(51) Int. Cl.: E03C 1/086

(54) **Valve for a water faucet**

(71) Applicant: Kao, Chih-Hung, Taipei (TW)
(72) Inventor: Kao, Chih-Hung, Taipei (TW)
(74) Representative: Casalonga, Axel

(57) **Abstract**

A valve includes a barrel (10), a valve core (20) received in the barrel (10), and a bottom cap (30) mounted in the barrel (10) and under the valve core (20). The valve core (20) has a disk (21) with multiple first ribs formed at an inner wall of a hole (212) thereof. Each of the first ribs has a first beveled teeth (215) formed at a top thereof. An outer rod (22) has multiple ratchets (222). Multiple first lugs (223) are formed at an outer periphery of the outer rod (22). The inner rod (23) has multiple second lugs (232) and each of the second lugs (232) has a second beveled tooth (233). The spindle (24) extends through an inlet (12) of the barrel (10) for blocking an inlet (12) of the barrel (10).

## Description

### 1. Field of the Invention

The present invention relates to a valve for a water faucet, and more particularly to a valve which is operated by a pushing rod installed under a water outlet.

### 2. Description of Related Art

A water faucet is generally provided with knobs for turning on/off the water faucet. The knobs of the water faucet often become contaminated by detergents, toners, bacteria and the like. When a person's hands have become dirty and they wish wash them clean, the knobs of the water faucets that are manually turned on by the user's dirty hands become dirty themselves. After the user has cleaned his dirty hands and proceeds to manually turn off the water faucets, the user's clean hands become dirty again.

Furthermore, the person often lathers the hands during cleaning, so the knobs will be contaminated by the lather when the person manually turns on the knobs again for rinsing off the hands. Thus, the user needs to wash the knobs by water collected in both hands, which is very inconvenient for the user. Furthermore, repeated such washing of the knobs over a long period of time wastes a lot of water.

For resolving the problem, the water faucet can be assembled with an infrared induced device as a controller to turn on/off the water faucet. When the user's hands come close to the water faucet, the infrared induced device will turn on the water faucet to discharge water. By using this device, the water faucet can be automatically operated without physical contact to prevent the cleaned hands from being contaminated. However, the infrared device has a high cost.

Therefore, the invention provides a valve for a water faucet to mitigate or obviate the aforementioned problems.

The main objective of the present invention is to provide a valve for a water faucet which is operated by pushing upwards an outer rod under a water outlet of the water faucet to prevent cleaned hands from being contaminated.

Other objectives, advantages and novel features of the invention will become more apparent from the following detailed description when taken in conjunction with the accompanying drawings.

### In the drawings:

Fig. 1 is an exploded perspective view of a valve in accordance with the present invention;
Fig. 2 is a cross sectional view of the valve in accordance with the present invention;
Fig. 3 is a schematically perspective view of the valve in accordance with the present invention;
Fig. 4 is a schematic view of the valve installed in a water faucet;
Fig. 5 is a schematically perspective view of the valve in a status of an outer rod being pushed upwards;

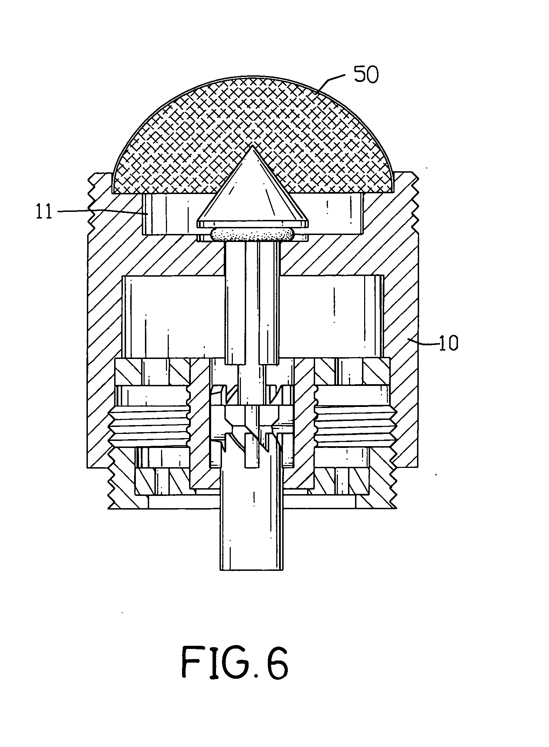

Fig. 6 is a schematically perspective view of the valve in a status of an inner rod being rotated;
Fig. 7 is a schematically perspective view of the valve in a status of the outer rod being released and the inner rod and a spindle being stopped at a raised position;
Fig. 8 is an exploded perspective view showing a different embodiment of the present invention;
Fig. 9 is a schematic cross sectional view showing the assembly of the present invention;
Fig. 10 is a schematic cross sectional view showing the movement of inner rod and the spindle caused by movement of the outer rod;
Fig. 11 is a schematic cross sectional view showing that the second lugs of the inner rod are supported by the first lugs of the outer rod so as to activate the valve;
Figs. 12A-12G are schematic view showing the relative relationship among the first beveled teeth, the first lugs, the ratchets, the second lugs and the second beveled teeth; and
Fig. 13 is a schematic view showing that each of the ratchets has two steps with different depths to support the second lugs of the inner rod so as to allow the water flow to have different volume.

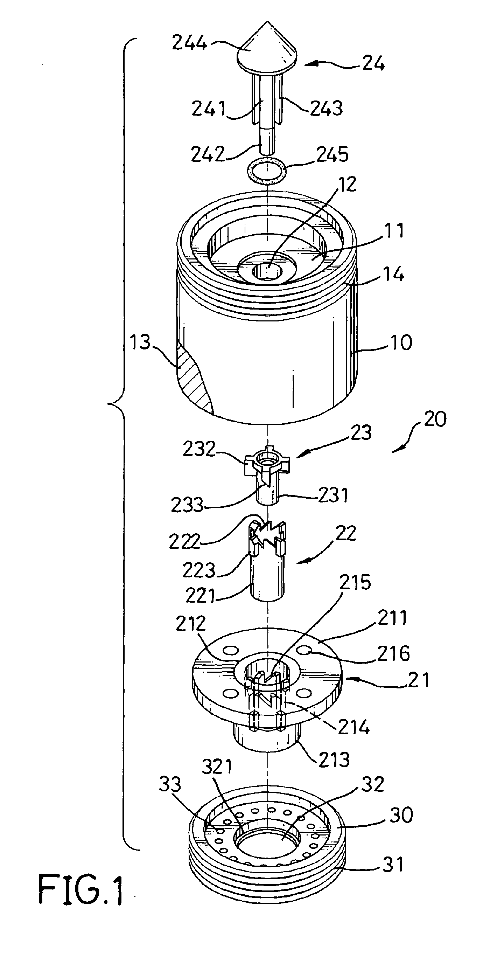

With reference to Figs. 1-2, a valve for a water faucet in accordance with the present invention is composed of a barrel (10), a valve core (20), and a bottom cap (30).

The barrel (10) has a closed upper end (not numbered) and an open lower end (not numbered). A recess (11) is defined at the upper end of the barrel (10), and an inlet (12) is axially defined in a bottom face defining the recess (11). An internal thread (13) is formed on an inner wall of the barrel (10) at the lower end, and a first external thread (14) is formed on an outer periphery of the barrel (10) at the upper end.

The valve core (20) is positioned in the barrel (10) and composed of a seat (21), an outer rod (22), an inner rod (23) and a spindle (24).

The seat (21) has a disk (211) received in the barrel (10) from the lower end. A hole (212) is defined through the center of the disk (211) and a tube (213) is integrally extended from a periphery defining the hole (212) and located under the disk (211). Multiple apertures (216) are defined around the hole (212) through the disk (211). Multiple first ribs (not numbered) are evenly and longitudinally formed on an inner wall of the tube (213), and multiple channels (214) are respectively and longitudinally defined between two adjacent first ribs. In this embodiment, four first ribs and four channels (214) are alternately formed on the inner wall of the tube (213). Each of the first ribs has a first beveled teeth (215) formed on a top end thereof.

The outer rod (22) has a first tubular part (221) to be inserted in the tube (213). Multiple ratchets (222) are formed on an upper end of the outer rod (22) with the same bevel as the first beveled teeth (215). The outer rod (22) has a circumferential position offset between corresponding ratchets (22) and the first beveled teeth (215). Multiple first lugs (223) are evenly and separately formed on an outer periphery of the outer rod (22) at the upper end. In this embodiment, four first lugs (223) are formed on the outer rod (22) and respectively located in a corresponding one of the channels (214), so the outer rod (22) can be axially moved upwards and downwards in the tube (213).

The inner rod (23) has a second tubular part (231) inserted in the outer rod (22). Multiple second lugs (232) are evenly and separately formed on an outer periphery of an upper end of the inner rod (23). In this embodiment, four second lugs (232) are formed on the inner rod (23) and each have a second beveled tooth (233) with the same bevel as the ratchet (222) and the first beveled teeth (215) and formed on a bottom of the respective second lugs (232). The second lugs (232) can be located in the channels (214), and the second beveled teeth (233) can abut the ratchets (222) and the first beveled teeth (215).

The spindle (24) has an upper segment (241) extending through the inlet (12), and a lower segment (242) integrally formed with the upper segment (241) and provided with a smaller diameter than the upper segment (241) and to be inserted in the second tubular part (231) of the inner rod (23). Multiple second ribs (243) are evenly and separately formed on an outer periphery of the upper segment (241) of the spindle (24). In this embodiment, four second ribs (243) are formed on the spindle (24) and respectively located in a corresponding one of the channels (214) to be engaged with a corresponding one of the second lugs (232). A head (244) is formed at a top end of the spindle (24) for blocking the inlet (12) in a watertight manner. An O ring (245) is provided to be mounted around the spindle (24) such that when the head (244) is blocking the inlet (12), the O ring (245) is located between the head (244) and the inlet (12).

The bottom cap (30) is fastened in the barrel (10) by a second external thread (31) on an outer periphery thereof to be engaged with the internal thread (13) of the barrel (10). A variety of commonly-found methods may be employed to secure the bottom cap (30) in the barrel (10), but in this embodiment shrink-fitting is preferred. An opening (32) is defined through the bottom cap (30) to allow the tube (213) to extend through the opening (32). A flange (321) is formed on a bottom defining the opening (32) to support the tube (213) after the tube (213) is inserted into the opening (32). Multiple outlets (33) are defined around the opening (32) in a bottom face of the bottom cap (30).

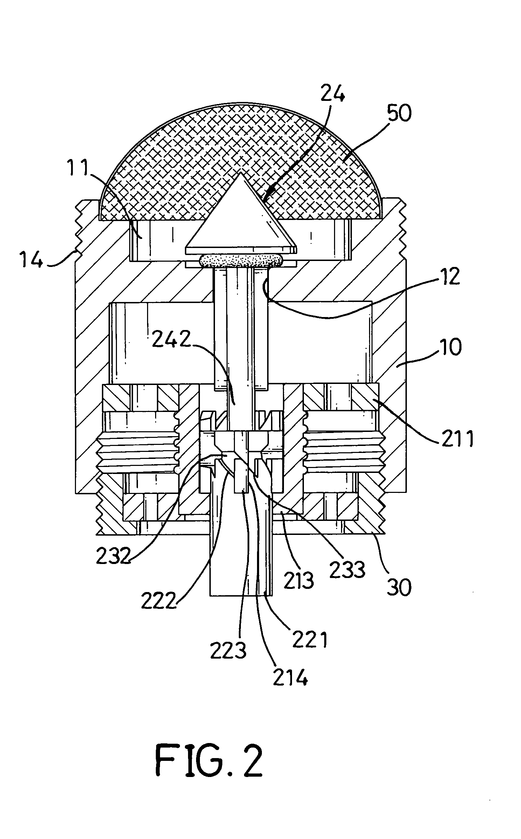

With reference to Fig. 2 and still using Fig. 1 for reference, in assembly, the first tubular part (221) of the outer rod (22) is inserted in the tube (213) from the hole (212) to position the first lugs (223) in the respective channels (214). The second tubular part (231) of the inner rod (23) is inserted in the outer rod (22), and the second lugs (232) are aligned with the first lugs (223) and positioned in the respective channels (214). The second beveled teeth (233) respectively abut the corresponding ratchets (222) of the outer rod (22). Then, the seat (21) is received in the barrel (10), and the bottom cap (30) is fastened at the lower end of the barrel (10) to securely receive the seat (21) in the barrel (10). Thereafter, the spindle (24) is inserted in the barrel (10) with the lower segment (242) positioned in the second tubular part (231) via the inlet (12). A filter (50) is then mounted on top of the spindle (24) to securely engage with a periphery defining the recess (11) of the barrel (10).

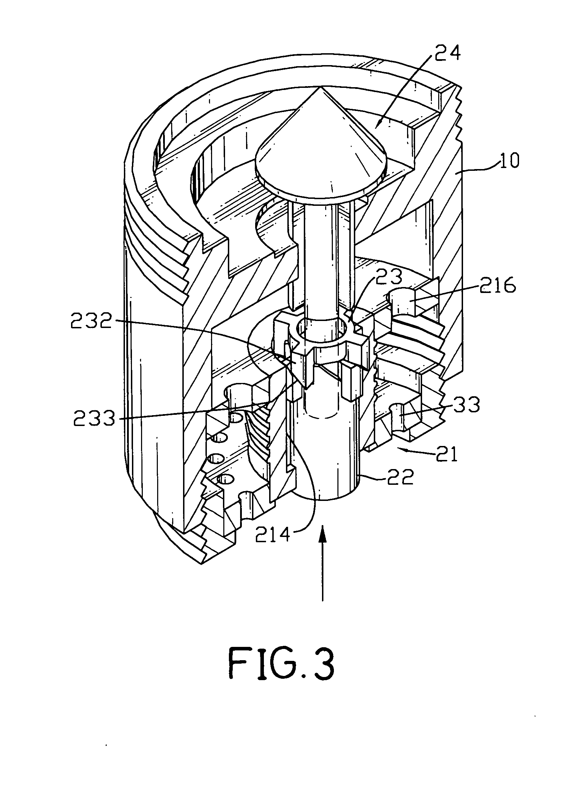

With reference to Figs. 3-5, the valve can be threadingly installed in a water outlet of a water faucet by the first external thread (14) of the barrel (10). In a status where a communication between the water outlet of the water faucet and the inlet (12) of the barrel (10) is blocked due to the O ring (245) which is sandwiched between the head (244) and a periphery defining the recess (11), the first tubular part (221) of the outer tube (22) extends out of the tube (213) and the bottom cap (30).

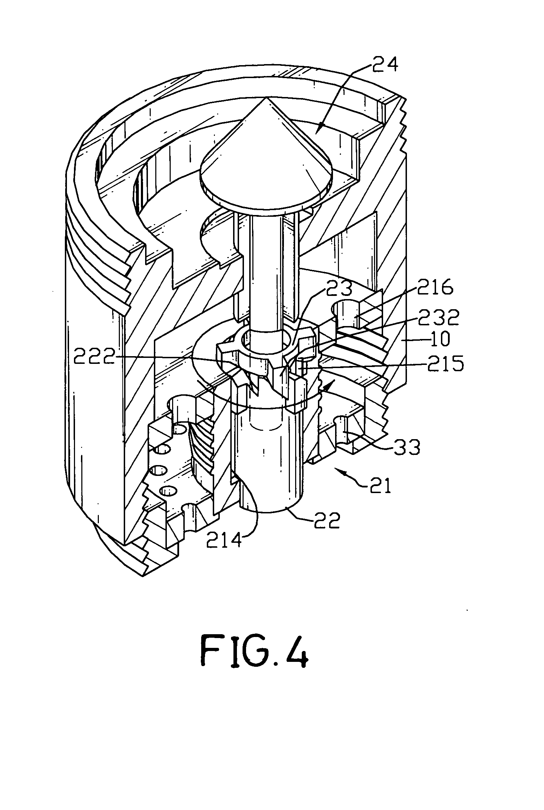

In use, when a user wants to communicate the water outlet of the water faucet (40) with the inlet (11) of the barrel (10), the outer rod (22) is pushed upwards, and the inner rod (23) and the spindle (24) are pushed by the outer rod (22) to move upwards. When the second lugs (232) of the inner rod (23) are retracted from the channels (214) due to the upward movement of the first tubular part (221), as illustrated in Fig. 4, the engagement between the ratchets (222) and the second beveled teeth (233) forces the inner rod (23) to rotate in a designated direction. Thus, the second lugs (232) are moved to a position above the first beveled teeth (215) to allow the first beveled teeth (215) to engage with the second beveled teeth (233). It is to be noted that when the first and second beveled teeth (215,233) are engaged with one another, the inner rod (23) is located at a position where a gap is defined between the head (244) and the inlet (12). Thus water is able to flow out of the water outlet of the water faucet and into the inlet of the valve of the present invention. After water flows into the inlet (12), the water is able to pass through the apertures (216) of the seat (21) and the cutouts (33) in the bottom cap (30). As a result, the user is able to use the water from the water faucet.

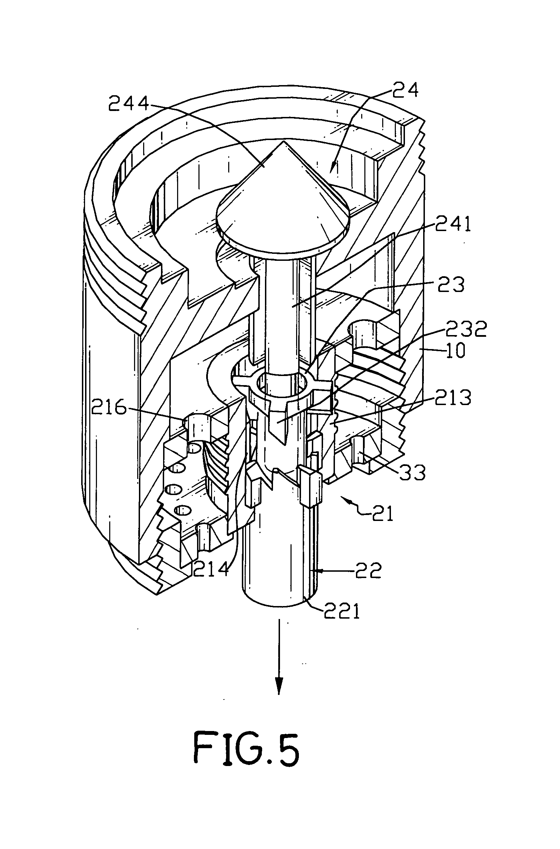

When the user pushes the outer rod (22) again, as shown in Fig. 5, the ratchets (222) of outer rod (22) move the second lugs (232) to disengage the second beveled teeth (233) from the first beveled teeth (215) and again due to the engagement between the ratchets (222) and the second beveled teeth (233), the inner rod (23) is rotated again, which allows the second lugs (232) to fall into the channels (214).

Then, the inner rod (23) and the spindle (24) are moved along the channels (214) and fall down to block the inlet (12) with the head (244) again, so the water faucet (40) is turned off.

Referring to Fig. 2, the valve further has a filter (50) mounted in the recess (11) for filtering water.

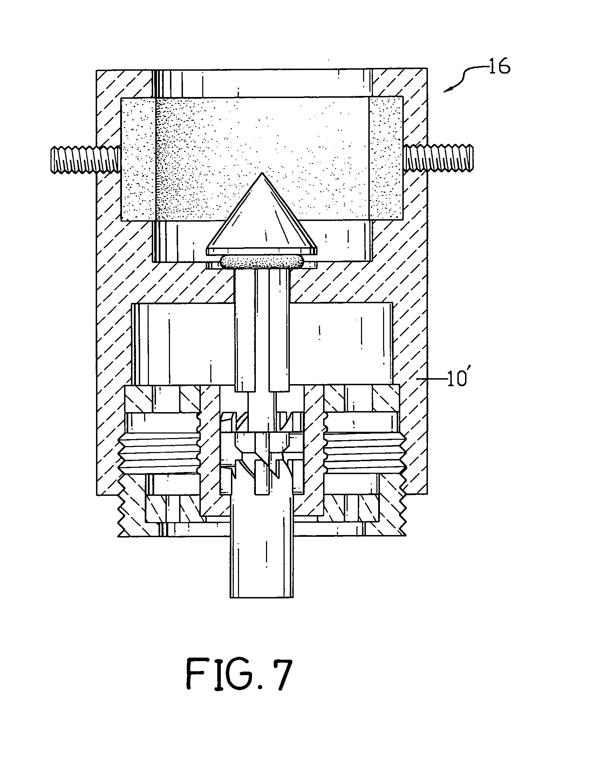

According to another embodiment as illustrated in Fig. 7, the barrel (10') has an upper tubular part (16) formed at the top end thereof. The water outlet of the water faucet is received in the upper tubular part (16) of the barrel (10') and secured by screws (not numbered) radially extended through the upper tubular part (16).

Therefore, when the water faucet is assembled with the valve of the present invention, the user's lathered hands can push the outer rod (22) upwards to turn on the water faucet, and water flowing through the outer rod (22) can rinse the user's hands and the contaminated outer rod (22) itself.. Thus, the user's cleaned hands will not become dirty when the user pushes the outer rod (22) again to turn off the water faucet.

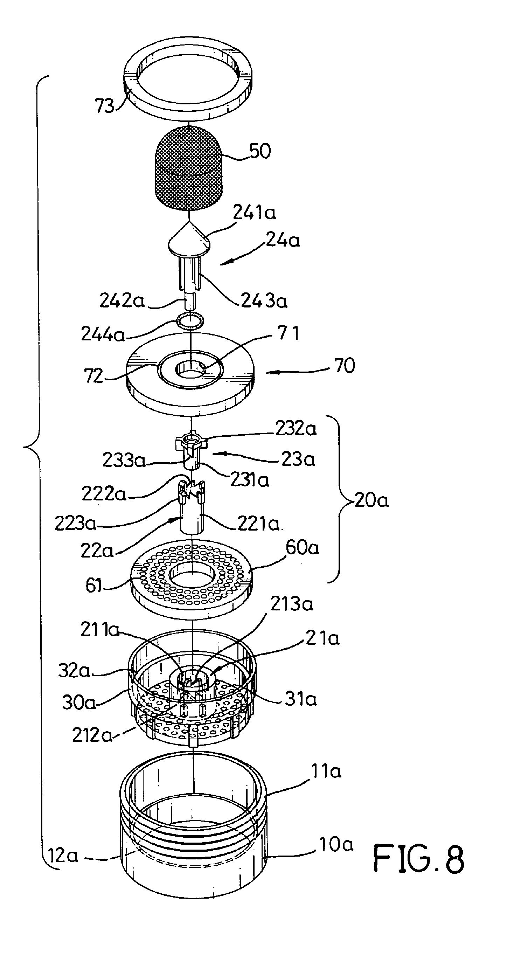

With reference to Fig. 8, a different embodiment of the present invention is shown and has a barrel (10a), a valve core (20a), a bottom cap (30a) and a filter (50).

The barrel (10a) has two open ends each oppositely formed relative to one another, an outer thread (11a) formed on an outer periphery of the barrel (10a) and a lip (12a) formed with the inner periphery of the barrel (10a) and extending inward toward a central axis of the barrel (10A).

The valve core (20a) includes a seat (21a), an outer rod (22a) and an inner rod (23a).

The seat (21a) is integrally formed on a top face of the bottom cap (30a) and has a centrally defined path (211a) defined through a bottom face of the bottom cap (30a), channels (212a) defined in an inner periphery of the seat (21a) and first beveled teeth (213a) formed on the inner periphery of the seat (21a).

The outer rod (22a) has a closed end formed on a bottom end of the outer rod (22a), an open end on a top end of the outer rod (22a), a first tubular part (221a) extending between the closed end and the open end, first ratchets (222a) formed on a top peripheral edge of the open end of the outer rod (22a) and first lugs (223a) formed on an outer periphery of the outer rod (22a) to be received in the channels (212a) of the seat (21a).

The inner rod (23a) has a second tubular part (231a) to be extending into the open end of the outer rod (22a), second lugs (232a) formed on a top portion of the inner rod (23a) to be alternately engaged with the ratchets (222a). Each second lug (232a) has a second beveled tooth (233a) formed on a free end face of the second lug (232a). A spindle (24a) is composed of a conical head (241a), a pole (242a) extending downward from a bottom face of the conical head (241 a) and multiple ribs (243a) formed on an outer periphery of the pole (242a).

The bottom cap (30a) has multiple holes (31a) defined through a bottom face of the bottom cap (30a). The seat (21a) is integrally formed on top of the bottom cap (30a).

A first disk (60) is provided between the bottom cap (30a) and the outer rod (22a) and has multiple first through holes (61) in communication with the holes (31a) of the bottom cap (30a) and an aperture (62) centrally defined in a central portion of the first disk (60) to allow an extension of the first tubular part (221a) of the outer rod (22a).

A second disk (70) is provided between the spindle (24a) and the inner rod (23a) and has an extension hole (71) defined in a central portion of the second disk (70) to allow an extension of the pole (242a) and the ribs (243a) and a groove (72) defined in a periphery around the extension hole (71) to receive a peripheral edge of the filter (50). A first O ring (244a) is provided between the bottom face of the conical head (241a) and the periphery around the extension hole (71) of the second disk (70). A second O ring (73) is provided on top of the second disk (70) for preventing water leakage between the water faucet and the barrel (10a) after the barrel (10a) is screwingly connected to the water faucet.

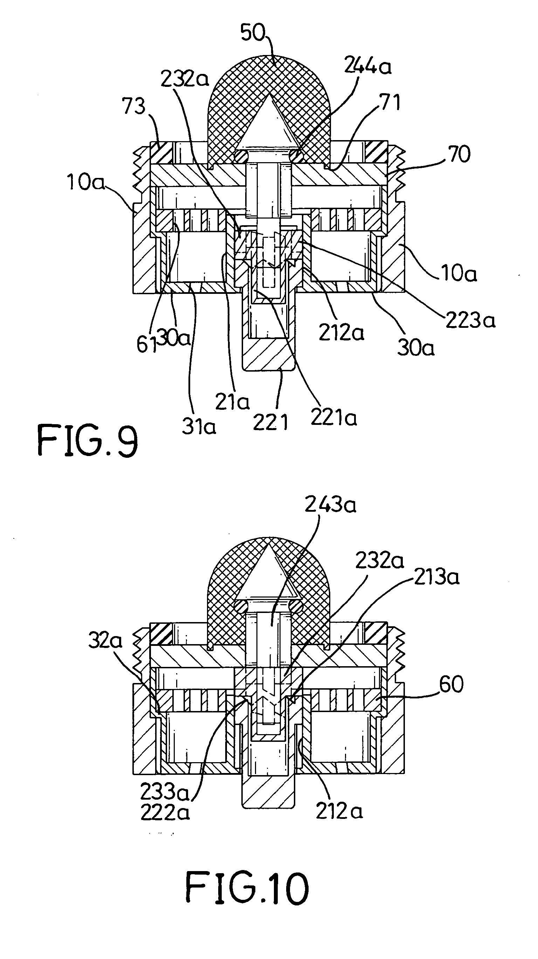

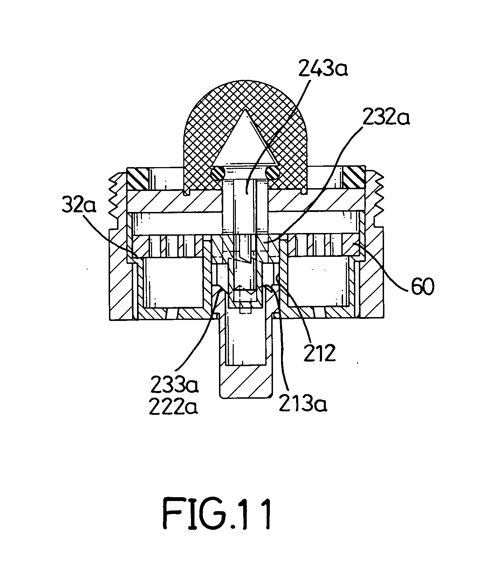

With reference to Figs. 9, 10 and 11, it is noted that after the valve of the present invention is assembled, the bottom cap (30a) is received in the barrel (10a) and the first tubular part (221a) of the outer rod (22a) is received in the path (211a) of the seat (21a) with the first lugs (223a) received in the channels (212a). The second beveled teeth (233a) of the second lugs (232a) are abutted to the ratchets (222a) of the outer rod (22a).

The first disk (60) is supported by a shoulder (32a) inside the bottom cap (30a) to allow the first through holes (61) to communicate with the holes (31a). The second disk (70) is mounted on top of the bottom cap (30a) with the pole (242a) extending through the extension hole (71) and the conical head (241a) engaging with the periphery around the extension hole (71) via the first O ring (244a). A peripheral edge of the filter (50) is securely received in the groove (72) of the second disk (70), wherein the second O ring (73) mounted on top of the second disk (70) functions to seal the engagement between the valve of the present invention and the water faucet.

Thereafter, when the outer rod (22a) is pushed upward relative to the bottom cap (30a), which is the same as that disclosed in the first embodiment of the present invention, the first lugs (223a) are slid along the channels (212a) inside the path (211a). Because the ratchets (222a) engage with the second beveled teeth (233a) of the second lugs (232a) of the inner rod (23a), the upward movement of the first lugs (223a) of the outer rod (22a) forces the inner rod (23a) to rotate for an angle. After the inner rod (23a) is rotated for an angle, the second beveled teeth (233a) engage with the first beveled teeth (213a) of the seat (21a). That is, the inner rod (23a) is supported by the seat (21a).

Furthermore, after the pole (242a) together with the ribs (243a) is extended into the extension hole (71) of the second disk (70), a bottom face of each of the ribs (243a) engages with a corresponding top face of one of the second lugs (232a). Therefore, after the inner rod (23a) is supported by the first beveled teeth (213a), the spindle (24a) is pushed upward to leave the engagement with the second disk (70). After the conical head (241a) leaves the engagement with the second disk (70), a gap (not numbered) is defined between the conical head (241a) and the periphery defining the extension hole (71) of the second disk (70). Thus water is able to flow through the extension hole (71), the first through hole (61) and out of the holes (31a) of the bottom cap (30a).

When the outer rod (22a) is pushed again, the second lugs (232a) are pushed by the first lugs (223a) again. The engagement between the ratchets (222a) and the second beveled teeth (233a) forces the inner rod (23a) to rotate for an angle again. Thus the second lugs (232a) fall back into the channels (212a) to close the gap between the conical (214a) and the periphery of the second disk (70). As a result of the gap being closed, the water from the water faucet is stopped by the first O ring (244a), which completes an entire cycle.

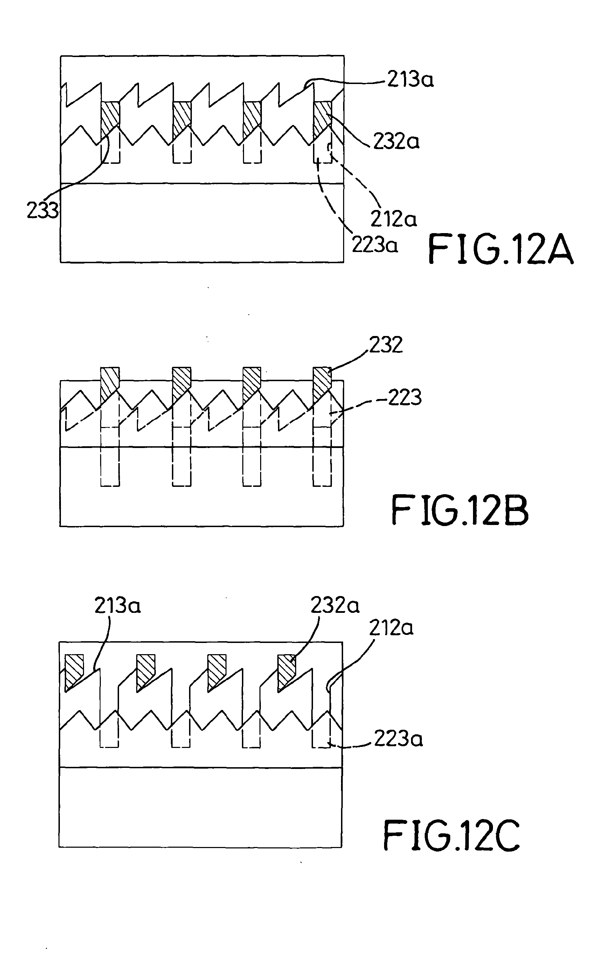

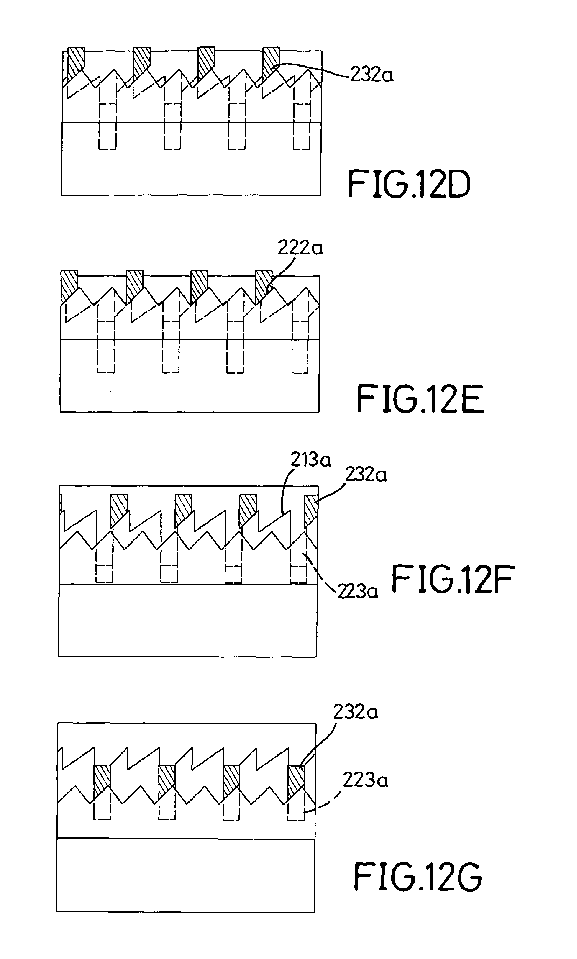

For a better understanding of the relative position among the first beveled teeth (213a) of the seat (21a), the first lugs (223a) and the second lugs (232a), Figs. 12A to 12G are presented.

First, when the valve of the present invention is not activated, it is noted that the first lugs (223a) are received in the channels (212a). Also the second lugs (232a) are received in the channels (212a) with the second beveled teeth (233a) engaging with the ratchets (222a). When the first lugs (223a) are moved upward to force the second lugs (232a) to leave the limitation of the channels (212a), the engagement between the ratchets (222a) and the second beveled teeth (233a) forces the second lugs (232a) to move in a direction close to the first beveled teeth (213a) as shown in Fig. 12B. When the first lugs (223a) are released to allow the second lugs (223a) to fall back into the channels (212a), the first beveled teeth (213a) engage with the second beveled teeth (233a) as shown in Fig. 12C, which lifts the inner rod (23a) to cause the formation of the gap between the periphery of the second disk (70) and the bottom face of the conical head (241a). When the first lugs (223a) are moved upward again to have the ratchets (222a) engaged with the second beveled teeth (233a), the inner rod (23a) is forced to rotate in the same direction again as shown in Figs. 12E and 12F. After the first lugs (223a) are released and back into the channels (212a), the second lugs (232a) then fall back into the channels (212a) to have the ratchets (222a) engage with the second beveled teeth (233a) inside the channels (212a).

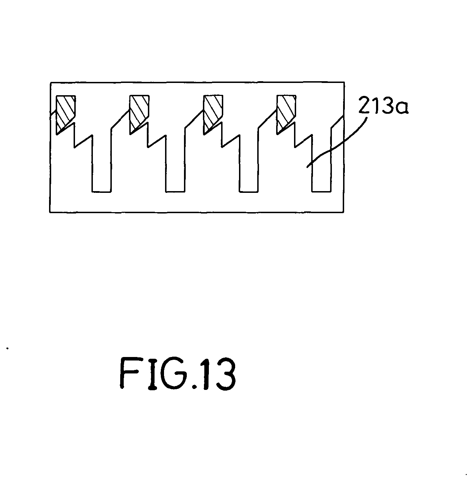

With reference to Fig. 13, it is noted that the first beveled teeth (213a) originally have two steps so as to support and shift the second lugs (232a) of the inner rod (23a) in different states. When the first beveled teeth (213a) have three steps each having a depth different from the others and when the second lugs (232a) are supported by the first beveled teeth (213a), the water volume flowing out of the holes (31a) of the bottom cap (30a) is different.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A valve for a water faucet comprising:
a barrel (10) having a closed upper end, an open lower end, an inlet (12) defined at the upper end and axially through the barrel (10);
a valve core (20) positioned in the barrel (10) and having
a seat (21) having a disk (211) received in the barrel (10) from the open lower end, a hole (212) defined through the disk (211), multiple apertures (216) defined around the hole (212); a tube (213) extending out from a periphery defining the hole (212), multiple first ribs evenly and separately formed on an inner wall of the tube (213), multiple channels (214) respectively defined between adjacent first ribs, multiple first beveled teeth (215) respectively formed on top ends of the first ribs;
an outer rod (22) having a first tubular part (221) formed to be extending into the tube (213) from the hole (212), multiple ratchets (222) formed on an upper end of the outer rod (22) with the same bevel as the first beveled teeth (215) and a circumferential position offset between corresponding ratchets (222) and the first beveled teeth (215), and multiple first lugs (223) formed on an outer periphery of the outer rod (22) and respectively located in the channels (214);
an inner rod (23) having a second tubular part (231) to be extending in the outer rod (22), multiple second lugs (232) formed on an outer periphery of the inner rod (23) to be corresponding to the first lugs (223), and each second lug (232) having a second beveled tooth (233) formed on a bottom of the second lug (232) and with the same bevel configuration as the ratchet (222) and the first beveled teeth (215); and
a spindle (24) having a lower segment (242) inserted in the inner rod (23), an upper segment (241) extending through the inlet (12), multiple second ribs (243) formed at an outer periphery of the upper segment (241), and a head (244) formed at a top end of the spindle (24) for blocking the inlet (12); and
a bottom cap (30) mounted in the barrel (10) and beneath the seat (21), the bottom cap (30) having an opening (32) defined through the bottom cap (30) to receive the tube (213) of the seat (21), and multiple outlets (33) defined around the opening (32) to communicate with the apertures (216) of the disk (211).

2. The valve as claimed in claim 1, wherein the seat (21) has four first ribs evenly formed at the inner wall of the seat (21), and four channels (214) are respectively defined between the four first ribs.

3. The valve as claimed in claim 1, wherein the barrel (10) has a recess (11) defined at the upper end, and a filter (50) is mounted in the recess (11).

4. The valve as claimed in claim 2, wherein the barrel (10) has a recess (11) defined in the upper end and a filter (50) is mounted in the recess (11).

5. The valve as claimed in claim 1, wherein the spindle (24) has an O ring (245) provided outside the upper segment and between the head (244) and the inlet (12).

6. The valve as claimed in claim 4, wherein the spindle has an O ring (245) provided outside the upper segment and between the head (244) and the inlet (12).

7. The valve as claimed in claim 6, wherein the bottom cap (30) has a flange (321) formed at a bottom of the opening (32) for supporting the tube (213).

8. The valve as claimed in claim 7, wherein the barrel (10) has a first external thread (14) formed at the upper end of the barrel (10).

9. The valve as claimed in claim 8, wherein the barrel (10) has an internal thread (13) formed at the lower end of the barrel (10), and the bottom cap (30) has a second external thread (31) formed at an outer periphery and engaged with the internal thread (13).

10. The valve as claimed in 1, wherein the bottom cap (30) is securely mounted in the barrel (10) by means of shrink fit.

11. A valve for a water faucet, the valve comprising:
a barrel (10a) adapted for connection with the water faucet in a water tight manner;
a bottom cap (30a) received in and supported by the barrel (10a), the bottom cap (30a) having multiple holes (31a) defined through a bottom face thereof;
a valve core (20a) having:
a seat (21a) formed on top of the bottom cap (30a) and having a path (211 a) defined through the seat (21a), multiple first ribs evenly and separately formed on an inner wall of a tube extending upward from a bottom face of the seat (21a), multiple channels (214a) respectively defined between adjacent first ribs, multiple first beveled teeth (213a) respectively formed on top ends of the first ribs;
an outer rod (22a) having a first tubular part (221 a) formed to be extending into the tube, multiple ratchets (222a) formed on an upper end of the outer rod (22a) with the same bevel as the first beveled teeth (213a) and a circumferential position offset between corresponding ratchets (222a) and the first beveled teeth (213a), and multiple first lugs (223a) formed on an outer periphery of the outer rod (22a) and respectively located in the channels (214a);
an inner rod (23a) having a second tubular part (231a) to be extending in the outer rod (22a), multiple second lugs (232a) formed on an outer periphery of the inner rod (23a) to be corresponding to the first lugs (223a), and each second lug (232a) having a second beveled tooth (233a) formed on a bottom of the second lug (232a) and with the same bevel configuration as the ratchet (222a) and the first beveled teeth (213a); and
a spindle (24) having a lower segment (242a) inserted in the inner rod (23a), an upper segment extending through the inlet, multiple second ribs formed at an outer periphery of the upper segment, and a head (24 1 a) formed at a top end of the spindle (24a);
a first disk (60a) sandwiched between the bottom cap (30a) and the outer rod (22a) and supported by the bottom cap (30a), the first disk (60a) having multiple through holes (61) defined through the first disk (60a);
a second disk (70) sandwiched between the inner rod (23a) and the spindle (24a), the second disk (70) having an extension hole (71) defined to allow an extension of the lower segment (242a) of the spindle (24a) and a groove (72) defined around a periphery defining the extension hole (71); and
a filter (50) having a peripheral edge received in the groove (72) of the second disk (70) for filtering water from the water faucet.

12. The valve as claimed in claim 11, wherein the seat (21a) is integrally formed on top of the bottom cap (30a), has a path (211a) defined through a bottom face of the bottom cap (30a) and four channels (212a) are respectively.

13. The valve as claimed in claim 11, wherein the spindle has an O ring (244a) provided outside the upper segment and between a head (241a) and the extension hole (71).

14. The valve as claimed in claim 12, wherein the spindle has an O ring (244a) provided outside the upper segment and between the head (241a) and the extension hole (71).

15. The valve as claimed in claim 14, wherein the bottom cap (30a) has a flange (321) formed at a bottom of the opening (32).

16. The valve as claimed in claim 15, wherein the barrel (10a) has a first external thread (11a) formed at the upper end of the barrel.

17. The valve as claimed in claim 16, wherein the barrel (10a) has an internal thread (12a).
